# FASCICULE DE BREVET EUROPEEN

(11) **EP 3 072 303 B1**
(45) Date de publication et mention de la délivrance du brevet: **03.04.2019**
(21) Numéro de dépôt: 14809940.1
(22) Date de dépôt: 17.11.2014
(51) Int. Cl.: H04N 21/2343, H04N 19/40

(54) **DIFFUSION ADAPTATIVE DE CONTENUS MULTIMEDIA**
ADAPTIVE RUNDFUNKÜBERTRAGUNG VON MULTIMEDIAINHALT
ADAPTIVE BROADCASTING OF MULTIMEDIA CONTENT

(30) Priorité: 22.11.2013 FR 1361519
(43) Date de publication de la demande: 28.09.2016
(73) Titulaire: Orange, 75015 Paris (FR)
(72) Inventeur: MARCHAND, Hervé Michel, F-35770 Vern sur Seiche (FR); RIVOALEN, Mathieu, F-22300 Lannion (FR)
(86) Numéro de dépôt international: PCT/FR2014/052941
(87) Numéro de publication internationale: WO 2015/075366

(56) Documents cités:
- US-A1- 2005 187 960
- US-A1- 2005 187 960
- US-A1- 2013 219 074
- US-A1- 2013 219 074

## Description

### Domaine technique

L'invention se rapporte aux communications de contenus multimédia. On entend par contenu multimédia tout contenu audio ou vidéo, ou plus généralement tout autre contenu numérique.

L'invention concerne plus spécifiquement la préparation, la transmission et la réception de contenus vidéo sur un réseau, en particulier le téléchargement continu, aussi appelé *streaming,* de contenus multimédia sur un réseau local à partir de terminaux clients (dans la suite appelés simplement *terminaux*) capables d'accéder à un tel contenu.

### Etat de la technique

Pour accéder à un contenu multimédia sur un réseau de type Internet, ou de manière similaire sur un réseau local, c'est-à-dire un réseau qui relie ensemble, avec ou sans fils, les équipements terminaux d'une maison ou d'une entreprise (ordinateurs, périphériques d'impression, de stockage, etc.), un terminal client effectue généralement une requête de la manière suivante : une première étape consiste à télécharger sur un premier serveur un document décrivant les paramètres d'accès au service via le protocole HTTP (de l'anglais *Hyper Text Transport Protocol*), un protocole de communication client-serveur développé pour les réseaux Internet et en particulier le Web. Ce document peut être un fichier informatique ou un ensemble d'informations descriptives du contenu accessible à une certaine adresse sur un second serveur, dit serveur de contenus. Dans la suite, on y réfèrera sous l'expression « fichier de description ». Lors d'une seconde étape, le terminal client accède au contenu sur le second serveur et le service démarre effectivement, c'est-à-dire que le terminal client peut recevoir et consommer (visualiser, jouer, etc.) le contenu.

Il est fréquent, dans ce contexte du protocole HTTP, de recourir, pour échanger les données entre le terminal client et le serveur, à une technique de type dit « streaming adaptatif » (HAS pour « HTTP Adaptive Streaming »). Ce type de technique permet notamment d'offrir une bonne expérience à l'utilisateur tout en tenant compte, par exemple, des variations de bande passante sur la liaison entre le terminal client et le serveur de contenus. Classiquement, différents flux sont encodés, ou transcodés, pour le même contenu multimédia, par exemple une vidéo numérique, correspondant à différents débits, différentes résolutions, différentes qualités. Dans la suite, on se réfèrera au « niveau » d'un flux multimédia pour désigner une certaine qualité et/ou débit et/ou résolution spatiale ou temporelle du contenu, notamment mais non exclusivement vidéo.

Le codage d'une vidéo a pour but de fournir une représentation du contenu initial de la vidéo conforme à certains paramètres (débit moyen, débit instantané, norme de codage-décodage utilisée, résolution spatiale, fréquentielle, etc.) sous une forme généralement plus compacte. Le transcodage consiste à ré-encoder une vidéo déjà encodée, avec de nouveaux paramètres. Chaque niveau est lui-même découpé en segments temporels, aussi appelés « fragments » (ou « *chunks* » en anglais) correspondant généralement à quelques secondes de contenu. Ces différents niveaux et la segmentation associée sont généralement décrits dans le fichier de description.

Il existe plusieurs solutions pour faciliter la mise à disposition et distribution d'un tel contenu en *streaming,* comme par exemple les solutions propriétaires *Microsoft Smooth Streaming* et *Apple HTTP Live Streaming* (HLS), ou encore la norme MPEG DASH (pour *Dynamic Adaptive Streaming over HTTP* - ISO/IEC 23009-1:2012(E)), une norme de l'organisme ISO/IEC dédiée au *streaming* de contenus multimédia sur Internet. Cette dernière norme permet notamment à des périphériques connectés au réseau (TV, tablettes, etc.) de consommer des contenus multimédia via le protocole HTTP. Dans le cas de MPEG DASH, l'accès au contenu se fait traditionnellement selon deux étapes :
1) Obtention d'un fichier de description, typiquement via le téléchargement, au travers d'une adresse HTTP, d'un fichier contenant notamment les adresses des fragments de média du contenu multimédia (par exemple fichier d'extension « .mpd » pour *Media Presentation Description*).
2) Obtention des fragments de média, typiquement via un téléchargement, à l'aide des adresses contenues dans le fichier de description.

Ainsi le terminal client choisit-il les différents fragments qui lui sont proposés dans le fichier de description en fonction de certains critères, comme ses capacités de décodage, la taille de son écran, la bande passante disponible, le format de codage vidéo le plus adapté, etc. Pour adapter ce choix au cours du temps, selon la variation de tels critères (par exemple l'évolution de la bande passante), le niveau des fragments peut évoluer dynamiquement tout au long de la lecture de la vidéo.

Le document D1 US 2005/0187960 A1 décrit un serveur de contenus multimédia . Les contenus sont distribués en streaming aux différents terminaux clients en s'adaptant a leur environnement en temps réel (débit, congestion du serveur, etc.).

Dans la suite, on considère que le terminal client est connecté à une *passerelle de service*, c'est à dire un équipement du réseau capable de lui fournir, directement ou indirectement, l'accès aux contenus. Ce type d'équipement peut aussi s'appeler serveur de contenus multimédia, ou plateforme de services, passerelle domestique, passerelle de réseau local d'entreprise, etc.

Si l'on considère qu'un contenu vidéo, dit contenu initial, arrive à la passerelle de service, il doit être transcodé en autant de niveaux qu'il y a de différents débits/qualités/résolutions proposés dans le fichier de description, ce qui introduit une grande complexité sur le module de transcodage, nécessitant des capacités d'encodage très importantes. De plus, la passerelle de service doit stocker ou faire stocker tous les niveaux transcodés, ce qui nécessite des capacités de stockage importantes.

Ainsi, il n'est généralement pas possible de stocker plus de quatre ou cinq niveaux différents pour un même contenu vidéo initial. Pour s'accommoder de cette limitation, le nombre de « niveaux » disponible dans le fichier de description est volontairement limité et donc le niveau choisi par le terminal client peut être éloigné du niveau optimum : par exemple, on peut choisir de limiter volontairement le nombre de niveaux pour délivrer des flux correspondant à une qualité prédéfinie (Haute Définition - HD, Définition standard - SD et définition réduite - RD). Une requête pour obtenir un débit donné de la part du client entraînera la fourniture du niveau inférieur le plus proche.

Cependant, il est fréquent d'avoir affaire à un parc de terminaux très hétérogènes, c'est-à-dire de capacités très différentes et dont les capacités évoluent de plus dans le temps. Il se peut que les niveaux proposés ne soient globalement pas satisfaisants pour l'ensemble des terminaux, car les qualités proposées sont trop éloignées des caractéristiques réelles des clients.

L'invention offre une solution ne présentant pas les inconvénients de l'état de la technique.

### L'invention

A cet effet, selon un aspect fonctionnel, l'invention a pour objet un procédé de gestion d'un contenu multimédia apte à être restitué par un terminal d'un réseau connecté à une passerelle de service, ledit contenu étant apte à être transcodé selon plusieurs niveaux initiaux et au moins un niveau cible, ledit procédé étant caractérisé en ce qu'il comprend les étapes de :
- réception d'une requête pour la restitution d'un contenu selon un premier niveau initial;
- mise à jour d'au moins un niveau cible prenant en compte ledit niveau initial.

Il est ainsi possible, selon l'invention, de répartir au mieux les niveaux cible en fonction des clients et de leurs caractéristiques en termes de résolution, débit, bande passante, capacités matérielles et logicielles, etc. Cette répartition optimale peut notamment tenir compte de tous les clients connectés au serveur de contenus à un instant donné. Elle permet de regrouper les clients selon des critères statistiques, par exemple d'homogénéité ou de proximité de l'une ou plusieurs de leurs caractéristiques, chaque client d'un groupe donné étant affecté à un niveau cible autorisé à varier et de ce fait apte à représenter au mieux à tout instant le groupe de clients en suivant leur évolution statistique. L'invention permet de surcroît de décharger la passerelle de service puisque le nombre de niveaux cible peut être largement inférieur au nombre de niveaux initiaux. Si, par exemple, trois niveaux cible sont calculés, il suffit à la passerelle de transcoder le contenu vidéo selon ces trois niveaux cible et non plus selon les niveaux initiaux proposés dans le fichier de description du contenu, qui peuvent être très nombreux, ce qui est extrêmement coûteux pour la passerelle en termes de ressources de transcodage, matérielles et/ou logicielles.

Selon un mode de mise en oeuvre particulier de l'invention, un procédé tel que décrit ci-dessus est en outre caractérisé en ce que l'étape de mise à jour d'au moins un niveau cible est suivie des étapes de :
- Commande de transcodage du contenu multimédia selon ledit au moins un niveau cible mis à jour ;
- Mise à disposition du contenu selon le niveau cible.

Il est ainsi possible, selon ce mode de mise en oeuvre, de commander le transcodeur le plus adapté au contenu demandé, c'est-à-dire typiquement celui dont le niveau cible est immédiatement inférieur au niveau demandé, pour la délivrance du contenu.

Un autre avantage de ce mode de mise en oeuvre est de générer des niveaux réellement utiles aux clients : en effet, si le nombre de niveaux cible est peu élevé pour un nombre important de clients, les niveaux cible transcodés ont une forte probabilité d'être tous utilisés par un ou plusieurs clients alors que les niveaux initiaux peuvent entraîner un transcodage inutile dans la mesure où un niveau initial parmi un très grand nombre de niveaux initiaux a une probabilité plus faible d'être effectivement choisie et consommée par un client.

Selon un second mode de mise en oeuvre particulier de l'invention, qui pourra être mis en oeuvre alternativement ou cumulativement avec le précédent, un procédé tel que décrit ci-dessus est en outre caractérisé en ce que les niveaux initiaux spécifient au moins une borne inférieure de débit et une borne supérieure de débit et en ce que au moins un débit d'un niveau cible se trouve compris entre la borne inférieure de débit et la borne supérieure de débit.

Un avantage de cette variante est de permettre de spécifier dans le fichier descriptif, non plus un nombre élevé de niveaux initiaux mais un ensemble de plages, ou intervalles, définis par des bornes inférieure et supérieure du débit d'une requête client. Un niveau cible de sortie peut alors être avantageusement calculé pour chaque intervalle selon l'invention, en fonction des statistiques calculées pour les clients qui se trouvent dans cet intervalle.

Selon un troisième mode de mise en oeuvre particulier de l'invention, qui pourra être mis en oeuvre alternativement ou cumulativement avec les précédents, un tel procédé est en outre caractérisé en ce que les niveaux initiaux sont décrits dans un fichier de description du contenu numérique.

Ce mode de mise en oeuvre de l'invention permet de décrire simplement un très grand nombre de nivaux initiaux et autorise une compatibilité avec la norme MPEG-DASH si le fichier est un fichier manifeste selon cette norme, ou avec toute autre norme utilisant un fichier de description précédemment citée.

Selon un quatrième mode de mise en oeuvre particulier de l'invention, qui pourra être mis en oeuvre alternativement ou cumulativement avec les précédents, un tel procédé est en outre caractérisé en ce que le au moins un niveau cible est calculé en fonction d'un nombre de terminaux capables d'y accéder.

Ce mode de réalisation de l'invention permet de gérer au mieux un parc de clients en affectant à chaque niveau un nombre de clients susceptibles d'y accéder. Notamment, on peut imposer que tous les clients puissent accéder à au moins une résolution cible, qui sera de préférence dans ce cas le niveau cible le plus bas (de débit le plus faible). Le nombre de clients affectés à un groupe peut être absolu ou relatif, se traduisant dans ce dernier cas par un pourcentage du nombre de clients connectés : on peut faire en sorte, grâce à l'invention, qu'un certain pourcentage de clients soit capable d'accéder à un instant donné à un niveau de résolution cible donné : par exemple, un tiers des clients peut accéder à la haute définition (HD), un tiers au niveau standard (SD) et le dernier tiers à la résolution et/ou au débit les plus faibles du niveau inférieur (LSD).

Selon un aspect matériel, l'invention concerne également un dispositif de gestion d'un contenu multimédia apte à être restitué par un terminal d'un réseau, ledit contenu étant apte à être transcodé selon plusieurs niveaux initiaux et au moins une résolution cible, ledit dispositif étant caractérisé en ce qu'il comprend :
- un module de réception d'une requête pour la restitution d'un contenu selon un premier niveau initial ;
- un module pour la mise à jour d'au moins un niveau cible prenant en compte ledit niveau initial.

Selon un autre aspect matériel, l'invention concerne également une passerelle de service comportant un dispositif de gestion d'un contenu multimédia tel que revendiqué ci-dessus.

Selon un autre aspect matériel, l'invention concerne également un programme d'ordinateur comportant des instructions de code pour la mise en oeuvre d'un procédé de gestion d'un contenu multimédia tel que décrit ci-dessus, lorsque celui-ci est exécuté par un processeur.

Les objets selon les aspects matériels de l'invention procurent au moins les mêmes avantages que ceux procurés par les procédés selon l'aspect fonctionnel.

L'invention sera mieux comprise à la lecture de la description qui suit, donnée à titre d'exemple et faite en référence aux dessins annexés.

### Les figures:

La figure 1 représente une architecture de *streaming* dans un réseau local selon l'état de l'art.
La figure 2 représente le principe de gestion des contenus multimédia selon un mode de réalisation de l'invention.
La figure 3 représente une architecture d'une passerelle de service implémentant un mode de réalisation de l'invention.
La figure 4 représente un chronogramme selon un mode de réalisation de l'invention.

### Description détaillée d'un exemple de réalisation illustrant l'invention

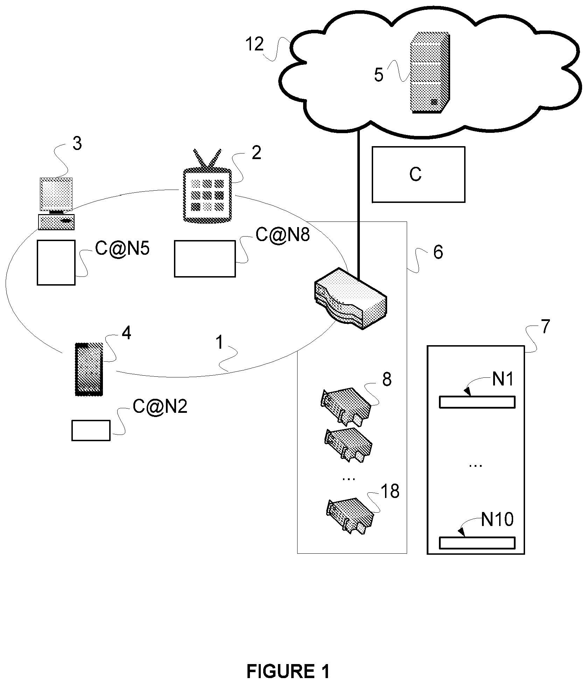

La figure 1 représente une architecture de *streaming* adaptatif basée sur l'utilisation du protocole HTTP dans un réseau local selon l'état de la technique. Le contexte du réseau local est donné à titre d'exemple et pourrait être transposé aisément à celui d'un réseau Internet quelconque.

Classiquement, un terminal client (2-4) souhaite entrer en communication avec un serveur de contenus (5) pour télécharger un contenu multimédia composé d'un ou plusieurs médias (audio, vidéo, etc.) Les contenus sont, selon cet exemple, des contenus « Live », c'est-à-dire destinés à être délivrés en temps réel aux clients.

Le serveur de contenus se trouve selon cet exemple dans le réseau large bande (12) mais il pourrait selon un autre exemple être situé dans un réseau local d'entreprise (1), plus spécifiquement au niveau de la passerelle de service (6) ou tout autre équipement capable d'héberger un tel serveur de contenus.

Chacun des terminaux (2-4) possède ses propres caractéristiques en termes de capacité de décodage, d'affichage, etc. Par exemple sur la figure sont schématisés trois niveaux différents correspondant à des débits et résolution différents (N2, N5, N8) pour la séquence vidéo (C) destinée aux trois terminaux représentés : résolution la plus faible (N2) pour la tablette (C@4), intermédiaire (C@N5) pour l'ordinateur (3) et élevée (C@N8) pour le téléviseur (2).

Le terminal peut être un terminal du réseau local (1) ou se trouver plus généralement sur un réseau de données, connecté à une passerelle de service (6), par exemple un terminal en mobilité sur un réseau mobile (3G, 4G, etc.)

La passerelle de service (6) assure dans cet exemple le routage des données entre le réseau large-bande (12) et le réseau local (1), gère les contenus multimédia en assurant notamment leur réception en provenance du réseau large-bande (12) ou du réseau local (1) et leur transcodage grâce aux transcodeurs (8-18) qui lui sont attachés. Les transcodeurs (8-18) peuvent typiquement se trouver dans le réseau large-bande (12), ou dans un réseau local (1) d'entreprise, notamment au niveau de la passerelle de service.

Chaque niveau transcodé par l'un des transcodeurs (8-18) est stocké sur la passerelle de service (6) ou alternativement sur un autre espace de stockage accessible par la passerelle de service (6), situé dans le réseau local ou à l'extérieur.

Dans la suite de l'exemple, comme exposé ci-dessus, on se positionne dans un contexte de *streaming* adaptatif selon la norme MPEG-DASH.

Le terminal (2-4) interroge tout d'abord la passerelle de service (6) pour obtenir une adresse du fichier de description (7) du contenu multimédia (C) souhaité. La passerelle de service (6) répond en fournissant au terminal l'adresse du fichier de description. Dans la suite, ce document est un fichier de type *manifest* selon la norme MPEG-DASH (C.mpd). Alternativement, ce fichier peut être récupéré directement auprès d'un serveur Internet local ou externe au réseau local, ou se trouver déjà sur la passerelle de service au moment de la requête. Il peut aussi correspondre à un autre format de description, comme introduit précédemment. On notera que ce fichier de description n'est pas essentiel à la mise en oeuvre de l'invention, chaque terminal pouvant décider, en dehors d'un contexte de normalisation, du niveau (débit/résolution) qui lui est approprié, sans l'aide d'un tel fichier.

Un exemple de fichier *manifest* (MPD) conforme à la norme MPEG/DASH et comportant la description de dix niveaux (N1-N10) du contenu C fragmenté est présenté en annexe 1.

Ce fichier MPD décrit les fragments du contenu correspondant à un certain niveau et permet de générer leurs adresses (URL - *Uniform Resource Locator*). Dans cet exemple simplifié, cette génération est faite à l'aide des éléments « BaseURL » (« http://x.com/contenu ») et « SegmentList » qui liste les parties complémentaires des adresses des différents fragments : « contenu_1s_500kb/ contenu_1s1.m4s » pour le premier fragment d'une seconde de la séquence « contenu » à 500kbps au format MPEG-4 (m4s), « contenu_1s_500kb/contenu_1s2.m4s » pour le second fragment, etc.

Le champ *duration* spécifié comme attribut de la balise « Segment List » indique la durée d'un segment en secondes. Le champ « codecs » de la représentation indique que l'on utilise un encodeur de type AVC, etc.

Ainsi, les URL d'accès aux deux premiers fragments vidéo pour le niveau N1, correspondant au débit le plus faible de 500 kbps sont dans cet exemple :
http://x.com/contenu/contenu_1s_500kb/contenu_1s1.m4s
http://x.com/contenu/contenu_1s_500kb/contenu_1s2.m4s

Une fois qu'il dispose de ces adresses de fragments, le terminal client (2-4) procède à l'obtention des fragments de média via un téléchargement à ces adresses. On notera que ce téléchargement s'opère traditionnellement au travers d'une URL HTTP, mais pourrait également s'opérer au travers d'une adresse universelle (URI - *Uniform Resource Identifier*) décrivant un autre protocole (*dvb:*//*monsegmentdecontenu* par exemple).

Actuellement, un transcodage multiple accompagné d'une description adéquate permet donc d'accéder à un certain nombre de niveaux (résolutions/débits/qualités) vidéo. Comme il a été dit précédemment, ce mécanisme suppose cependant l'existence d'autant de transcodeurs que l'on souhaite pouvoir générer de niveaux (dix dans notre exemple). De surcroît, il est impossible d'accéder à des fragments correspondant à un niveau qui n'a pas été prévu dans le fichier *manifest.* C'est donc une méthode coûteuse et peu flexible.

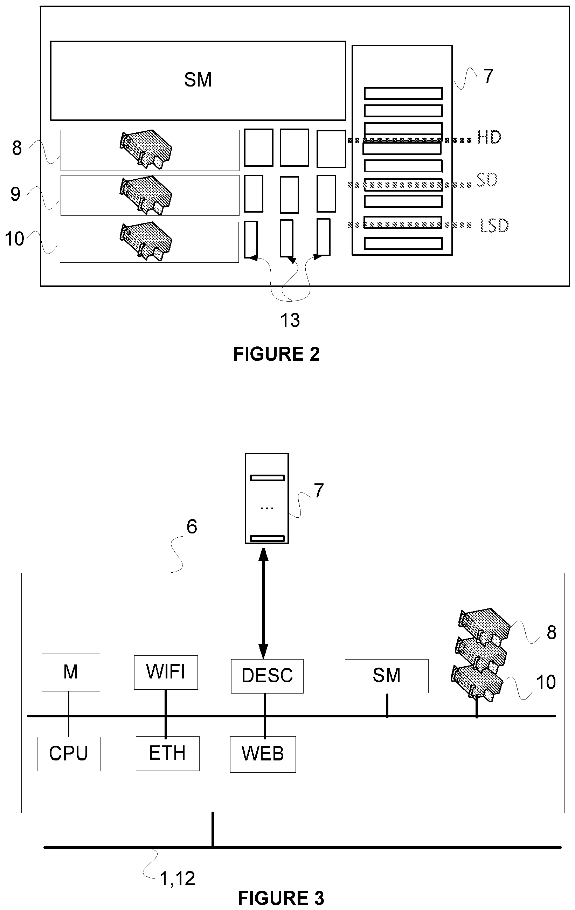

C'est pourquoi l'invention propose, comme illustré dans la figure 2, de limiter le nombre de niveaux en tenant compte des demandes des clients : par exemple, trois niveaux cible peuvent être prévus pour accommoder au mieux un parc de terminaux clients consommateurs de TV numérique

Dans cet exemple de réalisation, le fichier descriptif (7) est le même que celui de l'exemple précédent (annexe 1). Il comporte dix niveaux initiaux, de 500 kilobits par seconde (Kb/s - N1) à 15 mégabits par seconde (Mb/s - N10). Trois niveaux cible sont par ailleurs prédéfinis : HD (Haute Définition), SD (Standard Définition), LSD (Low Standard Definition).

Par exemple, ces trois niveaux sont initialisés pour correspondre à des niveaux standards de débit : HD à 10Mb/s, SD à 4 Mb/s, LSD à 1Mb/s. Trois transcodeurs (8,9,10) sont associés à ces trois niveaux cible représentés sur la figure par des traits en pointillé. Chacun des transcodeurs génère à l'avance un certain nombre de fragments vidéo (13) afin de pouvoir servir en temps réel le parc de clients.

On notera que l'invention est d'autant plus intéressante que le nombre de niveaux initiaux proposés dans le fichier de description (7) est élevé, fournissant ainsi une adaptation optimale du parc de clients à un nombre réduit de niveaux cible.

Dans ce mode de réalisation, plusieurs clients (2-4) du réseau local souhaitent consommer un contenu en *streaming.* Pour ce faire, ils téléchargent classiquement le fichier *manifest* et choisissent un niveau qui leur correspond.

A chaque requête en provenance d'un client, le module de gestion de la passerelle en charge du streaming (SM - Streaming Manager) prend en compte cette donnée pour mettre à jour ses statistiques. Cette mise à jour lui permet d'ajuster en permanence les débits à associer à chaque niveau cible, et donc chaque profil de transcodage, pour assurer la répartition voulue du parc de terminaux.

Le débit associé à chaque niveau peut être calculé selon un certain nombre de contraintes statistiques, par exemple et de manière non limitative :
- un certain pourcentage de clients bénéficient du débit cible (30% de parc de clients sont éligibles pour la HD, 60% pour la SD, 100% pour la LSD) ;
- un certain nombre de clients est calculé pour bénéficier de chaque niveau cible (par exemple, mille clients éligibles pour la HD) ;
- un algorithme de regroupement (en anglais, *clustering*) est utilisé pour calculer la meilleure répartition, par exemple celle minimisant la somme des distances entre la capacité effective des clients en termes de débits (et/ou résolutions, etc.) et les débits des niveaux cible associés,
- on peut également définir un seuil minimum à ne pas franchir pour chaque niveau cible. Par exemple, quelques soient les caractéristiques des formats demandés par les clients, on peut interdire de descendre en dessous de 6Mb/s pour un profil de type HD, 3Mb/s pour la SD, etc.
- une identification spécifique des clients peut également mener à une pondération pouvant influer sur le choix du niveau cible : par exemple, un client qui a payé pour une meilleure qualité de service (client *premium*) peut être basculé vers le niveau cible supérieur, grâce à une pondération plus élevée que celle d'un client ordinaire. Un opérateur de service ou de réseau peut aussi choisir de privilégier ses propres clients au détriment des autres, etc.
- etc.

A l'issue de cette mise à jour, si l'un des niveaux cible associé à un profil (HD, SD, LSD) a changé, le gestionnaire (SM) transmet une commande au transcodeur correspondant (8-10) afin de l'adapter au nouveau niveau et donc à l'évolution des caractéristiques des clients.

Ainsi, selon cet exemple, le débit HD cible calculé en temps réel par le serveur peut être de 7Mb/s au lieu des 6Mb/s initialement prévus (car 30% des clients actifs du parc demandent des formats supérieurs ou égaux à 7Mb/s), le débit SD de 2.3Mb/s au lieu de 3 Mb/s (pour atteindre 70% du parc) et le débit LSD de 1.2Mb/s (pour atteindre 100% du parc éligible).

Une fois cette mise à jour effectuée, le gestionnaire (SM) va pouvoir préparer les transcodeurs (8-10) et fournir les segments vidéo (13) en fonction des requêtes des clients. Si un client, après avoir récupéré le fichier *manifest*, exprime par exemple le souhait d'accéder à la qualité correspondant au débit de 2.5Mb/s, le serveur lui fournit des segments de contenus pré-encodés à 2.3Mb/s (nouveau niveau cible calculé pour le profil SD).

Alternativement il est possible, sans sortir du contexte de l'invention, de procéder à l'envoi des premiers fragments vers le client avant d'effectuer la mise à jour de la valeur du niveau cible.

Si un client n'a pas effectué de requête pendant un temps prédéfini, ou s'il a terminé la consommation de son contenu (C), le gestionnaire (SM) en tient compte pour le retirer du parc des clients actifs et remettre à jour les statistiques du groupe auquel appartient le client incriminé, en recalculant notamment le niveau cible.

La chaîne de transcodage de l'invention permet ainsi de s'adapter dynamiquement et au plus près des demandes des terminaux clients à l'aide d'un nombre limité de transcodeurs (dans notre exemple, 3 transcodeurs pour les 3 niveaux cible au lieu de 10 transcodeurs pour les 10 niveaux initiaux).

La figure 3 représente l'architecture d'un équipement qui implémente un mode de réalisation de l'invention, comme par exemple la passerelle de service (6) de la figure 1 comportant entre autres le module gestionnaire SM en charge du streaming adaptatif selon l'invention.

L'équipement comprend, classiquement, des mémoires (M) associées à un processeur (CPU). Les mémoires peuvent être de type ROM (de l'anglais *Read Only Memory*) ou RAM (de l'anglais *Random Access Memory*) ou encore Flash. La passerelle (6) communique avec le réseau local (1) et le réseau large bande (12) via le module Ethernet (ETH) d'une part et éventuellement le module WIFI pour une communication locale sans fils. Il met à disposition un site Web sur lequel les terminaux clients viennent se connecter et chercher les fichiers *Manifest.*

La passerelle de service (6) comprend en outre, conformément à l'invention, un module de gestion du streaming, SM, et un ensemble de transcodeurs (8-10). Le module SM, qui peut être logiciel et/ou matériel, est notamment capable de fournir et adapter les niveaux cible (Ri) de manière dynamique en fonction des demandes des clients, puis de piloter les transcodeurs (8-10) qui sont attachés à ces différents niveaux cible.

La passerelle de service (6) selon l'invention peut aussi contenir un disque dur pour le stockage des fragments vidéo, et éventuellement d'autres modules, comme par exemple un module de contrôle d'accès, un module d'interfaçage vidéo, etc.

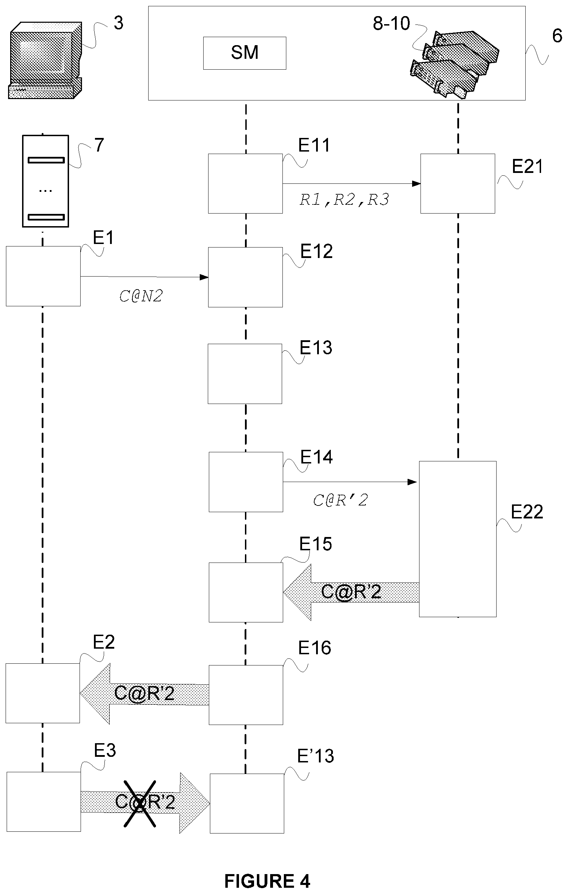

La figure 4 décrit les différentes étapes de streaming selon un mode de réalisation de l'invention, sous forme de chronogramme.

Lors d'une étape d'initialisation E11, le module de gestion de streaming SM de la passerelle (6) initialise un certain nombre de niveaux cible de sortie. Dans notre exemple, comme décrit précédemment, il s'agit des trois niveaux HD (Haute Définition), SD (Standard Définition), LSD (Low Standard Definition) initialisés respectivement à 10Mb/s, 4 Mb/s et 1Mb/s.

Puis, au cours de cette même étape E11, le module de gestion SM donne l'ordre aux modules de transcodage (8-10) de générer les premiers fragments vidéo des niveaux cible initiaux (R1, R2, R3), stocke éventuellement les fichiers correspondant à ces premiers fragments vidéo sur un disque, et met en pause les modules transcodeurs vidéo. Ultérieurement, un terminal client pourra recevoir en provenance de la passerelle l'un des fragments précédemment générés, à un niveau inférieur ou égal à celui qu'il a réellement requis, et le consommer.

Comme expliqué plus haut, avant d'avoir accès au premier segment de la vidéo (C) qu'il souhaite visualiser, le terminal client doit commencer par récupérer le fichier de description *manifest* (7). On suppose ici que le terminal (3) a déjà reçu le fichier de description « C.mpd » (7) qui lui est transmis, dans cet exemple, par la plate-forme (6) de service.

Lors d'une étape E1, le terminal client analyse le fichier de description (7) et requiert un contenu correspondant aux caractéristiques souhaitées (débit/résolution/qualité) du niveau N2 (C@N2).

Lors d'une étape E12, le module SM reçoit cette requête.

Lors d'une étape E13 suivante, il calcule de nouvelles statistiques sur le parc de terminaux clients, puis remet éventuellement à jour un ou plusieurs niveaux cible, en utilisant l'un ou l'autre des algorithmes cités précédemment (regroupement, *clustering*, etc.). Dans notre exemple, le niveau N2 requis (2,5 Mb/s) se trouve entre le niveau cible R2 et le niveau cible R3. Un calcul d'adaptation selon un algorithme de regroupement (en anglais, *clustering*) permet par exemple au module de gestion SM de modifier les niveaux R'1 et R'2 des niveaux cible en prenant en compte la nouvelle donnée (N2). Selon cet exemple, le niveau R3 n'est pas affecté (R'3 = R3).

Lors d'une étape E14, le module de gestion SM transmet aux transcodeurs (8-10) la requête du client (C@R'2) dans le nouveau format cible (R'2) adapté, c'est-à-dire l'un de ceux qui a été calculé lors de l'étape E13. Le transcodeur dédié à ce niveau (dans l'exemple, SD) peut alors générer les fragments suivants selon le niveau mis à jour le plus proche de la requête du terminal client (R'2, 2.3Mb/s) au cours d'une étape E22.

Les fragments correspondant sont éventuellement stockés sur le disque (E15) puis transmis au terminal client lors d'une étape E16.

Naturellement, les étapes précédentes peuvent être inversées, c'est-à-dire que les fragments correspondant au niveau cible précédent (R2) peuvent être transmis au client en attendant la mise à jour du niveau cible (R'2).

Le transcodeur contrôlé par le module de gestion du *streaming* (SM) continue ainsi à générer les fragments de manière dynamique en respectant les phases de pause et d'asservissement jusqu'à la fin de la lecture du contenu vidéo, qui peut être visualisé par le terminal client au cours d'une étape E2 facultative.

Lorsque le client (3) a fini de consommer le contenu C (étape E3), une nouvelle étape E'13 de calcul peut être effectuée pour remettre à jour les statistiques en retirant le client (3) du groupe auquel il était attaché.

Lors d'une nouvelle requête d'un terminal client pour un nouveau fichier de description *manifest* (7), les étapes E11 à E15 sont effectuées de nouveau sur la passerelle de service.

Selon une variante non représentée, l'invention repose sur un fichier de description organisé par plages de débit. Un tel fichier, correspondant par exemple à une évolution future des normes MPEG-DASH ou HLS, permet de spécifier des bornes supérieure et inférieure pour un ensemble d'intervalles, chaque intervalle représentant un niveau. Par exemple, si le débit du client se trouve compris entre les deux bornes de l'intervalle, le client est affecté audit intervalle. Selon l'invention, les statistiques peuvent alors être calculées et remises à jour dans chaque intervalle de manière à établir au plus juste le débit cible de l'intervalle, c'est-à-dire le débit effectif de transcodage.

Un extrait d'un tel fichier HLS, exposant des plages de valeurs liées au débit de la vidéo, est proposé ci-dessous. On notera qu'il s'agit seulement d'un exemple et que notamment d'autres valeurs caractéristiques, comme par exemple la résolution spatiale, peuvent être également définies sous forme de plage. Selon cet exemple, l'intervalle ciblé est compris entre 200Kb/s (BITRATEMIN=200000) et 2Mb/s (BITRATEMAX=2000000) et le terminal client peut dans cet intervalle procéder au choix du débit par incréments de 1Kb/s BITRATESTEP=1000).

```
 #EXTM3U
 #EXT-X-STREAM-INF:PROGRAM-ID=1, BITRATEMIN=200000,
 BITRATEMAX=2000000,BITRATESTEP=1000,
 stream/contenu.m3u8
```

Selon cette variante, le client HAS a la possibilité de choisir lui-même de manière très précise les valeurs les plus proches d'une cible idéale. Ces valeurs sont par exemple spécifiées par ce client au serveur par des paramètres transmis avec la requête HTTP permettant de récupérer les différents segments vidéo.

Il va de soi que le mode de réalisation qui a été décrit ci-dessus a été donné à titre purement indicatif et nullement limitatif, et que de nombreuses modifications peuvent y être facilement apportées par l'homme de l'art sans pour autant sortir du cadre de l'invention.

### Annexe 1 : exemple de fichier manifest MPEG-DASH

| |
|---|
| ```
 <?xml version="1.0"?>
 <MPD
 xmlns:xsi="http://www.w3.org/2001/XMLSchema-instance"
 xmlns="urn:mpeg:DASH:schema:MPD:2011"
 xsi:schemaLocation="urn:mpeg:DASH:schema:MPD:2011 DASH-MPD.xsd"
 type="dynamic"
 minimumUpdatePeriod=" PT1.0S "
 profiles="urn:mpeg:dash:profile:isoff-live:2011">
 <Representation id="0" codecs="avc1" mimeType="video/mp4"
 width="320" height="240" startWithSAP="1" bandwidth="46986">
 <BaseURL>http://x.com/contenu</BaseURL>
 <SegmentBase>
 <Initialization sourceURL="contenu_1s_500kbit/contenu_500kbit_dash.mp4"/>
 </SegmentBase>
 <SegmentList duration="1 ">
 <SegmentURL media="contenu_1s_500kb/contenu_1s1.m4s"/>
 <SegmentURL media="contenu_1s_500kb/contenu_1s2.m4s"/>
 <SegmentURL media="contenu_1s_500kb/contenu_1s3.m4s"/>
....
 </SegmentList>
 <SegmentList duration="1 ">
 <SegmentURL media="contenu_1s_1000kb/contenu_1s1.m4s"/>
 <SegmentURL media="contenu_1s_1000kb/contenu_1s2.m4s"/>
 <SegmentURL media="contenu_1s_1000kb/contenu_1s3.m4s"/>
....
 </SegmentList>
 <SegmentList duration="1 ">
 <SegmentURL media="contenu_1s_2000kb/contenu_1s1.m4s"/>
 <SegmentURL media="contenu_1s_2000kb/contenu_1s2.m4s"/>
 <SegmentURL media="contenu_1s_2000kb/contenu_1s3.m4s"/>
....
 </SegmentList>
....
 <SegmentList duration="1 ">
 <SegmentURL media="contenu_1s_15000kb/contenu_1s1.m4s"/>
 <SegmentURL media="contenu_1s_15000kb/contenu_1s2.m4s"/>
 <SegmentURL media="contenu_1s_15000kb/contenu_1s3.m4s"/>
....
 </SegmentList>
 </MPD>
``` |

## Revendications

1. Procédé de gestion d'un contenu multimédia apte à être restitué par un terminal (2-4) d'un réseau (1,12) connecté à une passerelle de service (6), ledit contenu étant apte à être transcodé selon plusieurs niveaux initiaux (N1...N10) et au moins un niveau cible (R1...R3) initialisé pour correspondre à un groupe de terminaux (SD, HD), ledit procédé comprenant :
- une étape de réception d'une requête (E12, C@N2) d'un terminal pour la restitution d'un contenu (C) selon un premier niveau initial (N2),
**caractérisé en ce qu'**il comprend en outre :
- une étape d'affectation dudit terminal à un niveau cible correspondant à un groupe ;
- une étape de mise à jour (E13) d'au moins ledit niveau cible (R'1, R'2, R'3) correspondant audit groupe, en fonction dudit groupe (SD) et dudit premier niveau initial (N2), pour obtenir un niveau cible mis à jour (R'2) ;
- une étape de sélection (E14) d'un niveau cible (R2/R'2) pour le terminal ;
- une étape de commande de transcodage (E14) du contenu multimédia (C@R'2, E14) selon ledit niveau cible sélectionné (R2, R'2) ;
- une étape de mise à disposition (E16) du contenu selon ledit niveau cible sélectionné (C@R'2).

2. Procédé selon la revendication 1, **caractérisé en ce que** ledit au moins un niveau cible (R'1, R'2, R'3) correspondant audit groupe est mis à jour (E13) de manière à optimiser le transcodage du contenu pour tous les terminaux du groupe.

3. Procédé selon la revendication 1, **caractérisé en ce qu'**il comprend en outre une étape de mise à jour d'un groupe de terminaux correspondant à un niveau cible.

4. Procédé selon la revendication 1, **caractérisé en ce que** l'étape de mise à jour d'au moins un niveau cible (R'1, R'2, R'3) est suivie de l'étape de sélection (E14) d'un niveau cible (R2/R'2) et **en ce que** le niveau cible sélectionné est le niveau cible mis à jour (R'2).

5. Procédé selon la revendication 1, **caractérisé en ce que** l'étape de mise à jour d'au moins un niveau cible (R'1, R'2, R'3) est précédée de l'étape de sélection (E14) d'un niveau cible (R2/R'2) et **en ce que** le niveau cible sélectionné est le niveau cible avant sa mise à jour (R2).

6. Procédé selon la revendication 1, **caractérisé en ce que** les niveaux initiaux (N1 - N10) spécifient au moins une borne inférieure de débit et une borne supérieure de débit et **en ce que** au moins un débit d'un niveau cible (R1) se trouve compris entre la borne inférieure de débit et la borne supérieure de débit.

7. Procédé selon la revendication 1, **caractérisé en ce que** les niveaux initiaux (N1 - N10) sont décrits dans un fichier de description (« C.mpd », 7, *manifest*) du contenu numérique (C).

8. Procédé selon la revendication 1, **caractérisé en ce que** le au moins un niveau cible est calculé en fonction d'un nombre de terminaux capables d'y accéder.

9. Dispositif (SM) de gestion d'un contenu multimédia apte à être restitué par un terminal (2-4) d'un réseau (1,12), ledit contenu étant apte à être transcodé selon plusieurs niveaux initiaux (N1...N10) et au moins un niveau cible (R1...R3) initialisé pour correspondre à un groupe de terminaux (SD, HD), ledit dispositif comprenant :
- un module (WIFI, ETH) de réception d'une requête (E12) d'un terminal pour la restitution d'un contenu (C) selon un premier niveau initial (N2) ;
le dispositif étant **caractérisé en outre en ce qu'**il comprend :
- un module pour l'affectation dudit terminal à un niveau cible correspondant à un groupe ;
- un module pour la mise à jour (E13) d'au moins un niveau cible (R'1, R'2, R'3) prenant en compte ledit niveau initial (N2) ;
- un module de sélection (E14) d'un niveau cible (R2/R'2) prenant en compte ledit niveau initial (N2) ;
- un module de commande de transcodage (E14) du contenu multimédia (C@R'2, E14) selon ledit niveau cible sélectionné (R2, R'2) ;
- un module de mise à disposition (E16) du contenu selon ledit niveau cible sélectionné (C@R'2).

10. Passerelle de service (6) comportant un dispositif de gestion d'un contenu multimédia (SM) selon la revendication 9.

11. Programme d'ordinateur comportant des instructions de code pour la mise en oeuvre du procédé de la gestion d'un contenu multimédia conforme à la revendication 1, lorsque celle-ci est exécutée par un processeur.

## Patentansprüche

1. Verfahren zum Verwalten von Multimediainhalten, die von einem Endgerät (2-4) eines Netzwerks (1, 12) wiederhergestellt werden können, das mit einem Service-Gateway (6) verbunden ist, wobei die Inhalte gemäß mehreren Anfangsebenen (N1...N10) und mindestens einer Zielebene (R1...R3) transcodiert werden können, die so initialisiert ist, dass sie einer Gruppe von Endgeräten (SD, HD) entspricht, wobei das Verfahren umfasst:
- einen Schritt des Empfangs einer Anforderung (E12, C@N2) von einem Endgerät zur Wiederherstellung von Inhalten (C) gemäß einer ersten Anfangsebene (N2),
**dadurch gekennzeichnet, dass** es weiterhin umfasst:
- einen Schritt der Zuweisung des Endgerätes zu einer Zielebene, die einer Gruppe entspricht;
- einen Schritt der Aktualisierung (E13) mindestens der Zielebene (R'1, R'2, R'3), die der Gruppe entspricht, in Abhängigkeit der Gruppe (SD) und der ersten Anfangsebene (N2), um eine aktualisierte Zielebene (R'2) zu erhalten; einen Schritt der Auswahl (E14) einer Zielebene (R2/R'2) für das Endgerät;
- einen Transcodierbefehlsschritt (E14) der Multimediainhalte (C@R'2, E14) gemäß der ausgewählten Zielebene (R2, R'2);
- einen Schritt der Bereitstellung (E16) der Inhalte gemäß der ausgewählten Zielebene (C@R'2) .

2. Verfahren nach Anspruch 1, **dadurch gekennzeichnet, dass** die mindestens eine Zielebene (R'1, R'2, R'3), die der Gruppe entspricht, so aktualisiert wird (E13), dass die Transcodierung der Inhalte für alle Endgeräte der Gruppe optimiert wird.

3. Verfahren nach Anspruch 1, **dadurch gekennzeichnet, dass** es weiterhin einen Schritt der Aktualisierung einer Endgerätegruppe umfasst, die einer Zielebene entspricht.

4. Verfahren nach Anspruch 1, **dadurch gekennzeichnet, dass** auf den Schritt der Aktualisierung mindestens einer Zielebene (R'1, R'2, R'3) der Schritt der Auswahl (E14) einer Zielebene (R2/R'2) folgt und dass es sich bei der ausgewählten Zielebene um die aktualisierte Zielebene (R'2) handelt.

5. Verfahren nach Anspruch 1, **dadurch gekennzeichnet, dass** vor dem Schritt der Aktualisierung mindestens einer Zielebene (R'1, R'2, R'3) der Schritt der Auswahl (E14) einer Zielebene (R2/R'2) kommt und dass es sich bei der ausgewählten Zielebene um die Zielebene vor ihrer Aktualisierung (R'2) handelt.

6. Verfahren nach Anspruch 1, **dadurch gekennzeichnet, dass** die Anfangsebenen (N1 - N10) mindestens eine untere Durchsatzbegrenzung und eine obere Durchsatzbegrenzung festlegen und dass mindestens ein Durchsatz einer Zielebene (R1) zwischen der unteren Durchsatzbegrenzung und der oberen Durchsatzbegrenzung liegt.

7. Verfahren nach Anspruch 1, **dadurch gekennzeichnet, dass** die Anfangsebenen (N1 - N10) in einer Beschreibungsdatei ("C.mpd", 7, *Manifest*) zu den digitalen Inhalten (C) beschrieben sind.

8. Verfahren nach Anspruch 1, **dadurch gekennzeichnet, dass** die mindestens eine Zielebene in Abhängigkeit einer Anzahl von Endgeräten berechnet wird, die in der Lage sind, darauf zuzugreifen.

9. Vorrichtung (SM) zum Verwalten von Multimediainhalten, die von einem Endgerät (2-4) eines Netzwerks (1, 12) wiederhergestellt werden können, wobei die Inhalte gemäß mehreren Anfangsebenen (N1...N10) und mindestens einer Zielebene (R1...R3) transcodiert werden können, die so initialisiert ist, dass sie einer Gruppe von Endgeräten (SD, HD) entspricht, wobei die Vorrichtung umfasst:
- ein Modul (WIFI, ETH) zum Empfang einer Anforderung (E12) von einem Endgerät zur Wiederherstellung von Inhalten (C) gemäß einer ersten Anfangsebene (N2),
wobei die Vorrichtung unter anderem **dadurch gekennzeichnet ist, dass** sie umfasst:
- ein Modul zur Zuweisung des Endgerätes zu einer Zielebene, die einer Gruppe entspricht;
- ein Modul zur Aktualisierung (E13) mindestens einer Zielebene (R'1, R'2, R'3), wobei die Anfangsebene (N2) berücksichtigt wird;
- ein Modul zur Auswahl (E14) einer Zielebene (R2, R'2), wobei die Anfangsebene (N2) berücksichtigt wird;
- ein Transcodierbefehlsmodul (E14) für die Multimediainhalte (C@R'2, E14) gemäß der ausgewählten Zielebene (R2, R'2);
- ein Modul zur Bereitstellung (E16) der Inhalte gemäß der ausgewählten Zielebene (C@R'2).

10. Service-Gateway (6), umfassend eine Vorrichtung zur Verwaltung von Multimediainhalten (SM) nach Anspruch 9.

11. Computerprogramm mit Codeanweisungen zur Umsetzung des Prozesses zur Verwaltung von Multimediainhalten gemäß Anspruch 1, sofern diese durch einen Prozessor ausgeführt wird.

## Claims

1. Method for managing a multimedia content capable of being rendered by a terminal (2-4) of a network (1, 12) connected to a service gateway (6), said content being able to be transcoded according to several initial levels (N1...N10) and at least one target level (R1...R3) initialized to correspond to a group of terminals (SD, HD), said method comprising:
- a step of reception of a request (E12, C@N2) from a terminal for the rendering of a content (C) according to a first initial level (N2),
**characterized in that** it also comprises:
- a step of assignment of said terminal to a target level corresponding to a group;
- a step of updating (E13) at least said target level (R'1, R'2, R'3) corresponding to said group, as a function of said group (SD) and of said first initial level (N2), to obtain an updated target level (R'2),
- a step of selection (E14) of a new target (R2/R'2) for the terminal;
- a step or ordering transcoding (E14) of the multimedia content (C@R'2, E14) according to said selected target level (R2, R'2);
- a step of provision (E16) of the content according to said selected target level (C@R'2).

2. Method according to Claim 1, **characterized in that** said at least one new target level (R'1, R'2, R'3) corresponding to said group is updated (E13) so as to optimize the transcoding of the content for all the terminals of the group.

3. Method according to Claim 1, **characterized in that** it also comprises a step of updating of a group of terminals corresponding to a target level.

4. Method according to Claim 1, **characterized in that** the step of updating at least one target level (R'1, R'2, R'3) is followed by the step of selection (E14) of a target level (R2/R'2) and **in that** the selected target level is the updated target level (R'2).

5. Method according to Claim 1, **characterized in that** the step of updating of at least one target level (R'1, R'2, R'3) is preceded by the step of selection (E14) of a target level (R2/R'2) and **in that** the selected target level is the target level before the updating (R2) thereof.

6. Method according to Claim 1, **characterized in that** the initial levels (N1...N10) specify at least one lower bit rate bound and one upper bit rate bound and **in that** at least one bit rate of a target level (R1) is contained between the lower bit rate bound and the upper bit rate bound.

7. Method according to Claim 1, **characterized in that** the initial levels (N1...N10) are described in a description file ("C.mpd", 7, *manifest*) of the digital content (C).

8. Method according to Claim 1, **characterized in that** the at least one target level is calculated as a function of a number of terminals capable of accessing it.

9. Device (SM) for managing a multimedia content capable of being rendered by a terminal (2-4) of a network (1, 12), said content being able to be transcoded according to several initial levels (N1...N10) and at least one target level (R1...R3) initialized to correspond to a group of terminals (SD, HD), said device comprising:
- a module (WIFI, ETH) for receiving a request (E12) from a terminal for the rendering of a content (C) according to a first initial level (N2) ;
the device being characterized also in that it comprises:
- a module for assigning said terminal to a target level corresponding to a group;
- a module for updating (E13) at least one target level (R'1, R'2, R'3) taking into account said initial level (N2);
- a module for selecting (E14) a target level (R2/R'2) taking into account said initial level (N2) ;
- a module for ordering transcoding (E14) of the multimedia content (C@R'2, E14) according to said selected target level (R2, R'2);
- a module for providing (E16) the content according to said selected target level (C@R'2) .

10. Service gateway (6) comprising a device for managing a multimedia content (SM) according to Claim 9.

11. Computer program comprising code instructions for implementing the method for managing a multimedia content according to Claim 1, when it is executed by a processor.
